# DEMANDE DE BREVET EUROPEEN

(11) **EP 4 542 800 A1**
(43) Date de publication de la demande: **23.04.2025**
(21) Numéro de dépôt: 24206876.5
(22) Date de dépôt: 16.10.2024
(51) Int. Cl.: H02G 3/00, H01R 25/16, H02G 3/38

(54) **SYSTÈME DE DISTRIBUTION DE COURANT ET ENSEMBLE D'ALIMENTATION ÉLECTRIQUE COMPRENANT UN TEL SYSTÈME DE DISTRIBUTION**

(30) Priorité: 17.10.2023 FR 2311200
(71) Demandeur: SCHNEIDER ELECTRIC INDUSTRIES SAS, 92500 Rueil-Malmaison (FR)
(72) Inventeur: LINARES, Louis, 38660 LA TERRASSE (FR); WASNER, Olivier, 38320 EYBENS (FR)
(74) Mandataire: Lavoix

(57) **Abrégé**

La présente invention concerne un système (10) de distribution de courant comprenant une goulotte (11) comprenant un premier bord (14) et un deuxième bord (15), comprenant chacun des crans de fixation (19), plusieurs barres (25), et un boîtier de dérivation (40). Le dispositif de maintien (30) comprend un support (32) comprenant un premier et un deuxième verrou (38, 39), qui coopèrent respectivement avec un cran de fixation du premier bord et un cran de fixation du deuxième bord (15) et un contre-support (34), déformant élastiquement le premier verrou (38) et le deuxième verrou, et un capot (47), recouvrant la goulotte, les barres et le dispositif de maintien. Le boîtier de dérivation (40) comprend une embase (42), avec des premières dents (48) des deuxièmes dents (49), fixée à la goulotte par coopération de formes des premières dents avec le premier bord et des deuxièmes dents avec le deuxième bord.

## Description

La présente invention concerne un système de distribution de courant et un ensemble d'alimentation électrique comprenant un tel système de distribution de courant.

Pour distribuer le courant vers des charges électriques, il est connu d'utiliser des câbles, notamment avec une installation en étoile depuis une source de courant. Cette solution nécessite un câble par charge électrique, ce qui demande de nombreux câbles et rend l'installation coûteuse. Il est également connu d'utiliser des bus de puissance, souvent fixés sur un mur d'un bâtiment, avec des prises de dérivation qui sont branchées sur le bus de puissance, afin de connecter les charges à la source de courant. Cependant, les bus de puissance ont généralement des longueurs prédéfinies à l'avance, et sont difficilement adaptables à différentes situations. Ils sont également difficiles à installer.

Le but de l'invention est alors de proposer un système de distribution de courant qui résolve ces inconvénients et qui soit adaptable et simple d'installation.

A cet effet, l'invention a pour objet un système de distribution de courant comprenant :
- une goulotte adaptée à être fixée à une surface de support, s'étendant selon une direction longitudinale, la goulotte comprenant un fond, un premier bord et un deuxième bord, les premier et deuxième bords s'étendant de part et d'autre du fond selon une direction transversale et comprenant chacun des crans de fixation ;
- plusieurs barres, s'étendant au moins partiellement dans la goulotte selon la direction longitudinale, chaque barre comprenant une âme en matériau électriquement conducteur configurée pour conduire un courant électrique, et une gaine entourant l'âme, la gaine étant électriquement isolante ; et
- un boîtier de dérivation.

Selon l'invention, le système de distribution comprend en outre :
- un dispositif de maintien comprenant :
   o un support, s'étendant selon la direction transversale, le support comprenant des encoches recevant chacune une barre, un premier verrou et un deuxième verrou, qui coopèrent respectivement avec un cran de fixation du premier bord et un cran de fixation du deuxième bord et,
   ∘ un contre-support, en appui contre le support selon une direction d'épaisseur, le contre-support déformant élastiquement le premier verrou et le deuxième verrou afin de maintenir le premier verrou et le deuxième verrou en coopération respectivement avec le cran de fixation du premier bord et le cran de fixation du deuxième bord,
- un capot, encastré sur la goulotte et recouvrant la goulotte, les barres et le dispositif de maintien.

Selon l'invention, le boîtier de dérivation comprend en outre :
∘ une embase, comprenant une première platine et une deuxième platine qui comprennent respectivement une pluralité de premières dents et une pluralité de deuxièmes dents, l'embase étant fixée à la goulotte par coopération de formes des premières dents avec le premier bord et des deuxièmes dents avec le deuxième bord de la goulotte, l'embase définissant des couloirs recevant chacun une barre ;
∘ des prises de dérivation, chaque prise de dérivation étant connectée à l'une des barres,
∘ un dispositif de protection électrique, connecté à au moins l'une des prises de dérivation,
∘ une enveloppe intermédiaire, fixée à l'embase et entourant l'embase, les prises de dérivation et le dispositif de protection électrique, l'enveloppe intermédiaire étant en appui sur la première platine et sur la deuxième platine, l'enveloppe intermédiaire maintenant les premières et deuxièmes dents en prise respectivement avec le premier bord et avec le deuxième bord, et
∘ une face externe, fixée sur l'enveloppe intermédiaire et recouvrant les prises de dérivation et le dispositif de protection électrique.

Grâce à l'invention, le système d'alimentation est adaptable à de nombreuses géométries de murs. Il est également facile à monter. En effet, les dispositifs de maintien utilisés permettent de maintenir les barres tout en étant faciles à installer. Les boîtiers de dérivation sont également faciles d'installation, grâce à l'embase et à l'enveloppe intermédiaire qui maintient l'embase fixée à la goulotte. Leur nombre est modifiable en fonction de l'application du système d'alimentation, par exemple le nombre de charges ou la puissance du bus d'alimentation.

Suivant d'autres aspects avantageux de l'invention, le système de distribution de courant comprend une ou plusieurs des caractéristiques suivantes, prises isolément ou suivant toutes les combinaisons techniquement possibles :
- Le boîtier de dérivation comprend en outre deux dispositifs d'étanchéité disposés de part et d'autre des prises de dérivation et du dispositif de protection électrique selon la direction longitudinale, chaque dispositif d'étanchéité comprenant :
   - un joint, s'étendant selon la direction transversale, logé dans l'embase, le joint comprenant des encoches recevant chacune une des barres (25) ; et
   - un contre-joint, s'étendant selon la direction transversale, les barres étant interposées entre le joint et le contre-joint, le contre-joint étant affleurant aux première et deuxième platines.
- Le système comprend en outre un boîtier d'alimentation, comprenant :
   - une embase comprenant une première platine et une deuxième platine, comprenant respectivement une pluralité de premières dents et une pluralité de deuxièmes dents, l'embase étant fixée à la goulotte par coopération de formes des premières dents avec le premier bord et des deuxièmes dents avec le deuxième bord, l'embase définissant des couloirs recevant chacun l'une des barres,
   - un sectionneur, connecté entre un câble d'alimentation et les barres, le câble d'alimentation étant apte à être connecté à une source électrique;
   - une enveloppe intermédiaire, fixée à l'embase et entourant l'embase et le sectionneur, l'enveloppe intermédiaire comprenant une ouverture pour laisser passer le câble d'alimentation, l'enveloppe intermédiaire étant en appui sur le première et deuxième platines et maintenant ainsi les premières et deuxièmes dents en prise respectivement avec le premier bord et avec le deuxième bord ; et
   - une face externe, fixée sur l'enveloppe intermédiaire et recouvrant le sectionneur.
- Les barres comprennent chacune une partie amont et une partie aval, chaque partie amont comprenant une première extrémité au niveau de laquelle l'âme est apparente, chaque partie aval comprenant une deuxième extrémité au niveau de laquelle l'âme est apparente, la deuxième extrémité étant en appui sur la première extrémité dans la direction d'épaisseur (Z), le système comprenant en outre :
   - un boîtier de jonction, comprenant :
      ∘ des connecteurs, chaque connecteur connectant, pour l'une des barres donnée, la première extrémité et la deuxième extrémité entre elles,
      ∘ une embase, entourant les premières et deuxièmes extrémités et les connecteurs, l'embase comprenant une première platine et une deuxième platine qui comprennent respectivement une pluralité de premières dents et une pluralité de deuxièmes dents, l'embase étant fixée à la goulotte par coopération de formes des premières dents avec le premier bord et des deuxièmes dents avec le deuxième bord de la goulotte, l'embase définissant des couloirs recevant chacun la partie amont et la partie aval de l'une des barres ; et
   - une face externe, fixée sur l'embase et recouvrant les connecteurs et la première et la deuxième extrémité des parties amont et aval de chaque barre.
- Le boîtier de dérivation comprend en outre un dispositif de mesure, configuré pour mesurer une consommation électrique.
- Le système comprend cinq barres, les barres étant configurées pour conduire respectivement une première phase, une deuxième phase, une troisième phase, un neutre et une référence de potentiel.
- Le système comprend une pluralité de dispositifs de maintien, répartis selon la direction longitudinale.

L'invention concerne également un ensemble d'alimentation électrique comprenant :
- le système selon l'une quelconque des revendications précédentes ;
- au moins une borne d'alimentation, connectée au dispositif de protection électrique, configurée pour alimenter une charge électrique lorsqu'elle est connectée à la borne d'alimentation par un utilisateur.

Suivant d'autres aspects avantageux de l'invention, l'ensemble d'alimentation électrique comprend une ou plusieurs des caractéristiques suivantes, prises isolément ou suivant toutes les combinaisons techniquement possibles :
- L'ensemble d'alimentation électrique comprend en outre un câble de communication, reliant la borne d'alimentation à une unité de contrôle électronique, le support comprenant une encoche recevant le câble de communication.
- La charge électrique est une batterie d'un véhicule électrique.

L'invention apparaîtra plus clairement à la lecture de la description qui va suivre, donnée uniquement à titre d'exemple non limitatif, et faite en référence aux dessins dans lesquels :
- [Fig. 1] la figure 1 est une vue en perspective d'un ensemble d'alimentation électrique conforme à l'invention, incorporant un système de distribution de courant également conforme à l'invention ;

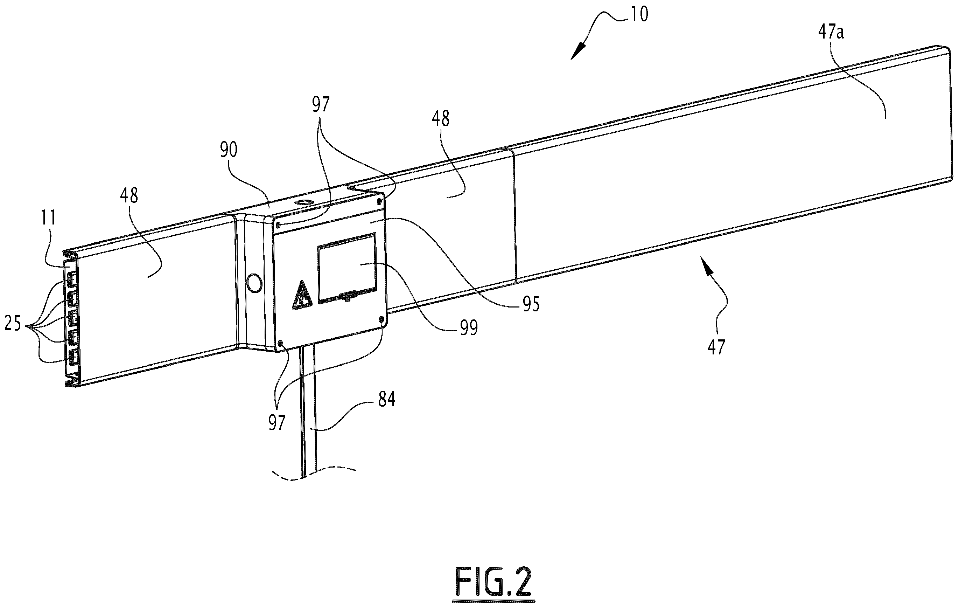

- [Fig. 2] la figure 2 est une vue partielle en perspective de l'extérieur du système de distribution de courant de la figure 1 ;
- [Fig. 3] la figure 3 est une vue partielle en perspective du système de distribution de courant des figure 1 et 2, certains éléments étant omis pour permettre la visualisation d'autres éléments du système de distribution de courant ;
- [Fig. 4] la figure 4 est une vue partielle en perspective du système de distribution de courant des figures 1 à 3 montrant une goulotte, une embase et des supports ;
- [Fig. 5] la figure 5 est une coupe du système de la figure 2, selon le plan de coupe V-V à la figure 3; et
- [Fig. 6] la figure 6 est une coupe du système de la figure 2, selon le plan de coupe VI-VI à la figure 3.

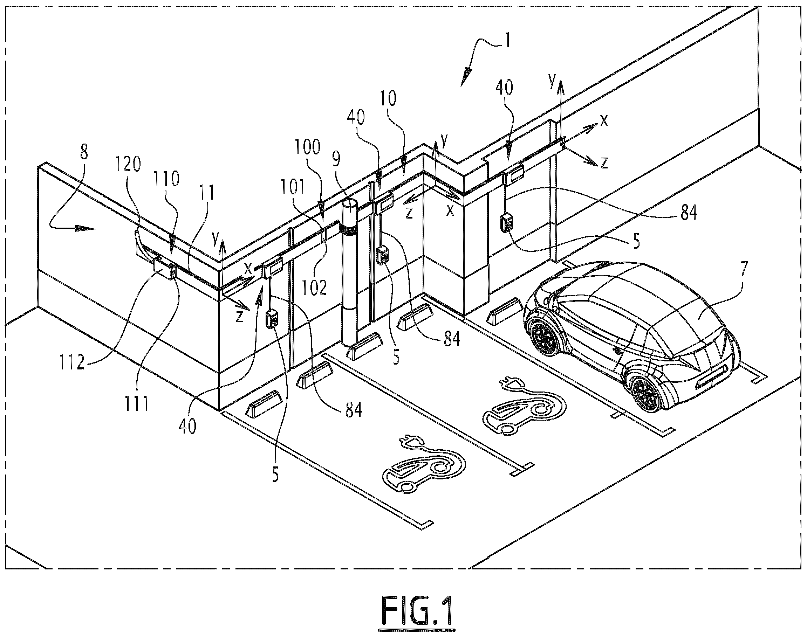

La figure 1 représente une vue générale d'un ensemble d'alimentation électrique 1. L'ensemble d'alimentation électrique 1 équipe, dans la figure 1, un parking pour voitures électriques et comprend plusieurs bornes d'alimentation 5, et un système de distribution de courant 10, dit aussi système 10.

Chaque borne d'alimentation 5 est configurée pour être connectée à une charge électrique, comme par exemple une batterie d'un véhicule électrique 7, et est également configurée pour alimenter la charge électrique lorsque cette dernière est connectée à la borne d'alimentation 5.

Le système de distribution de courant 10 est configuré pour connecter une source de courant, non représentée, aux bornes d'alimentation 5 afin d'alimenter les bornes d'alimentation 5 en électricité. Le système de distribution de courant 10 est ici installé dans un parking, plus précisément fixé sur l'un des murs 8 du parking, mais est de manière plus générale fixé sur une surface de support, qui est par exemple un mur, un sol ou un plafond.

En variante non représentée, le système de distribution 10 est installé en extérieur.

En variante non représentée, l'ensemble d'alimentation électrique 1 est installé dans un bâtiment, par exemple pour alimenter des appareils domestiques, des prises de courant, des dispositifs d'éclairage, ou des serveurs. Dans ce cas, l'ensemble d'alimentation électrique ne comprend pas de bornes d'alimentation, et le système de distribution de courant 10 est directement connecté aux charges électriques.

Le système de distribution de courant 10 comprend une goulotte 11, plusieurs barres 25, au moins un ensemble de maintien 30, un boîtier de dérivation 40 et un capot 47. Dans les figures, le système de distribution de courant 10 comprend plusieurs ensembles de maintien 30 et plusieurs boîtiers de dérivation 40. La goulotte 11 est formée de plusieurs tronçons de même type qui diffèrent par leurs longueurs, qui sont adaptées à la géométrie du mur 8 et la présence éventuelle d'obstacles, tels qu'une conduite 9.

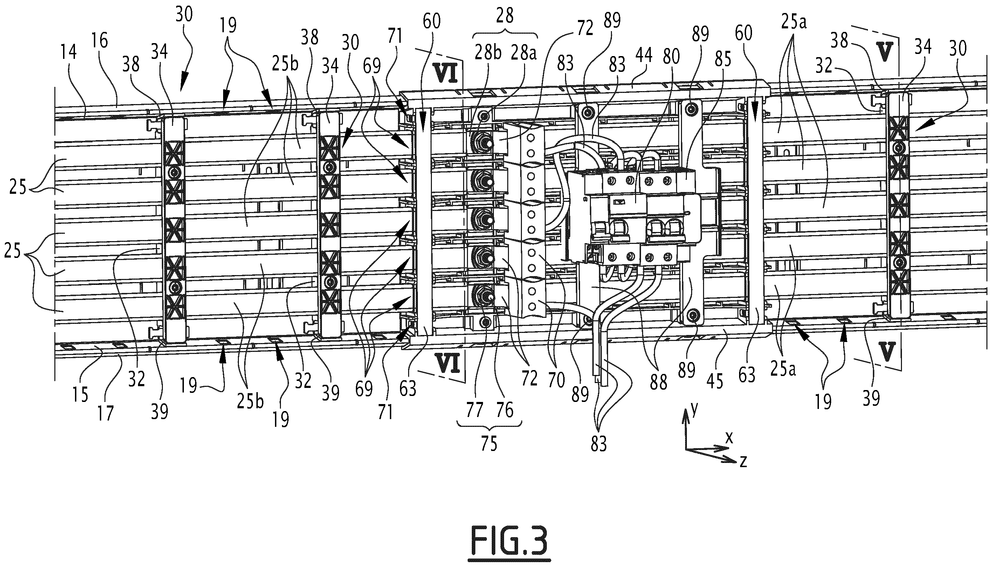

Une goulotte 11 est visible aux figures 3 à 6. La goulotte 11 s'étend selon une direction longitudinale X et est fixée au mur 8. Une direction transversale Y et une direction d'épaisseur Z sont définies comme étant perpendiculaires à la direction longitudinale X en tout point de la direction longitudinale X. La direction longitudinale X étant une direction locale de la goulotte 11, elle suit la forme du mur 8. En configuration montée de la goulotte 11 sur le mur 8, la direction transversale Y est dirigée vers le haut et la direction d'épaisseur Z est perpendiculaire au mur 8 et s'éloigne de celui-ci.

Les tronçons qui constituent la goulotte 11 sont ici des tôles 12 qui sont assemblées bout à bout selon la direction longitudinale X. Les tôles 12 peuvent être espacées selon la direction longitudinale X afin de s'adapter à la géométrie du mur 8, notamment dans le cas d'irrégularités du mur 8 causées par exemple par des obstacles, comme la conduite 9. Les tôles 12 sont avantageusement en métal, mais peuvent être en un autre matériau, notamment synthétique, comme du plastique.

Chaque tôle 12 comprend un fond 13, un premier bord intérieur 14 et un deuxième bord intérieur 15. En configuration montée de la goulotte 11 sur le mur 8, le premier bord intérieur 14 est un bord supérieur de la tôle 12, alors que le deuxième bord intérieur 15 est un bord inférieur de cette tôle. Le fond 13 s'étend selon la direction longitudinale X. Le fond 13 est fixé au mur 8, par exemple en étant vissé au mur 8 au moyen de vis non représentées.

Le premier bord intérieur 14 et le deuxième bord intérieur 15 s'étendent selon la direction longitudinale X et selon la direction d'épaisseur Z et sont disposés de part et d'autre du fond 13 selon la direction transversale Y. Le premier bord intérieur 14 et le deuxième bord intérieur 15 comprennent respectivement une première lèvre ou lèvre supérieure extérieure 16 et une deuxième lèvre ou lèvre inférieure extérieure 17. Les première et deuxième lèvres 16 et 17 sont recourbées et s'étendent depuis respectivement le reste du premier bord intérieur 14 et le reste du deuxième bord intérieur 15, à l'opposé du fond 13 et dans une direction opposée à la direction d'épaisseur Z.

Les premier et deuxième bords 14 et 15, respectivement supérieur et inférieur, comprennent chacun des crans de fixation 19. Les crans de fixation 19 du premier bord 14 sont peu visibles sur les figures, mais sont, dans l'exemple des figures, symétriques des crans de fixation 19 du deuxième bord intérieur 15 par rapport à un plan parallèle aux directions X et Z. De manière avantageuse, les crans de fixation 19 sont régulièrement espacés selon la direction longitudinale X et un cran de fixation 19 du premier bord intérieur 14 est en regard d'un cran de fixation 19 du deuxième bord intérieur 15 selon la direction transversale Y.

Les barres 25 sont avantageusement au nombre de cinq. Dans ce cas, une première barre 25 est configurée pour conduire une première phase, une deuxième barre 25 est configurée pour conduire une deuxième phase, une troisième barre 25 est configurée pour conduire une troisième phase, une quatrième barre 25 est configurée pour correspondre au neutre et une cinquième barre 25 est configurée pour correspondre à une référence de potentiel, aussi appelée terre. En variante non représentée, les barres 25 sont au nombre de deux, trois, ou quatre. Dans le cas où les barres 25 sont au nombre de deux, une première barre 25 est configurée pour conduire une première phase et une deuxième barre 25 est configurée pour correspondre au neutre. Dans le cas où les barres 25 sont au nombre de trois, une première barre 25 est configurée pour conduire une première phase, une deuxième barre 25 est configurée pour correspondre au neutre et une troisième barre 25 est configurée pour correspondre à la terre. Dans le cas où les barres 25 sont au nombre de quatre, trois barres 25 sont configurées pour conduire chacune une phase et une quatrième barre 25 est configurée pour correspondre soit à la terre soit au neutre.

De manière particulièrement avantageuse, les barres 25 sont des barres souples, c'est-à-dire qu'elles s'adaptent à la géométrie de la surface de support. Ceci est bien visible à la figure 1, où les barres s'adaptent aux angles du mur 8, ainsi qu'à la conduite 9. De préférence, les barres 25 sont suffisamment souples pour être cintrées à la main.

Chaque barre 25 comprend un âme 26 en matériau électriquement conducteur, tel que du cuivre. L'âme 26 est ainsi configurée pour conduire un courant électrique. Dans le cas où les barres 25 sont des barres souples, l'âme 26 de chaque barre 25 est avantageusement un empilement de feuillets en matériau électriquement conducteur. L'âme 26 est entourée d'une gaine 27 en matériau électriquement isolant, par exemple des matériaux synthétiques comme du plastique. Ainsi, une section des barres 25 selon un plan défini par les directions transversales Y et d'épaisseur Z est plus allongée selon la direction transversale Y que la direction d'épaisseur Z. Les barres 25 sont donc aplaties selon la direction d'épaisseur Z.

Chaque barre 25 s'étend au moins partiellement dans la goulotte 11, selon la direction longitudinale X. Les barres 25 sont disposées à côté et à distance les unes des autres selon la direction transversale Y. Les barres 25 sont donc parallèles à la surface de support, ici le mur 8.

Chaque barre 25 est divisée en sections, alignées selon la direction longitudinale X. Chaque section comprend une partie amont 25a et une partie aval 25b. La partie amont 25a d'une section donnée est plus en amont par rapport à la source que la partie aval 25b de cette section selon la direction longitudinale X.

Chaque partie amont 25a comprend une première extrémité 28a, au niveau de laquelle l'âme 26 est apparente. De même, chaque partie aval 25b comprend une deuxième extrémité 28b au niveau de laquelle l'âme 26 est apparente. La deuxième extrémité 28b de la partie aval 25b d'une section donnée et la première extrémité 28a de la partie amont 25a de la section immédiatement suivante selon la direction longitudinale X sont superposées selon la direction d'épaisseur Z, formant une zone de jonction 28, pour que le courant électrique circule le long de la barre 25, entre ses sections.

En pratique, et selon un aspect avantageux de l'invention, les zones de jonction 28 des différentes barres 25 sont alignées selon la direction transversale Y.

Afin de maintenir les barres 25 dans la goulotte 11, le système de distribution de courant 10 comprend au moins un dispositif de maintien 30, généralement plusieurs dispositifs de maintien 30 répartis dans la goulotte 11, comme visible aux figures 3 à 5.

Chaque dispositif de maintien 30 comprend un support 32 et un contre-support 34. Les supports 32 des différents dispositifs de maintien 30 sont de préférence identiques, de même que les contre-supports 34.

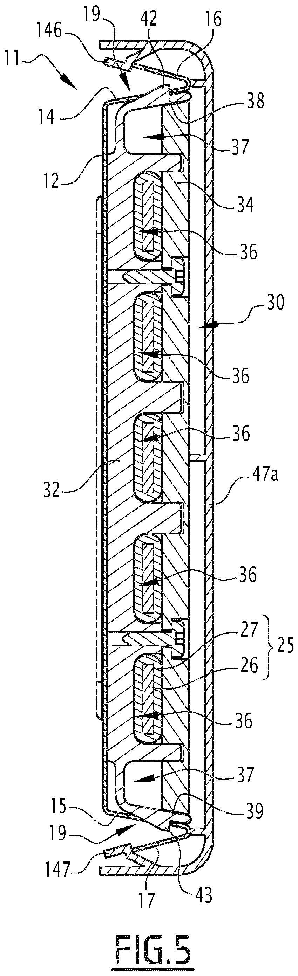

Un support 32 s'étend selon la direction transversale Y et est en appui contre le fond 13 selon la direction d'épaisseur Z. Le support 32 comprend des encoches 36, ici cinq encoches 36. Chaque encoche 36 est configurée pour recevoir une barre 25 et empêcher un mouvement des barres 25 selon la direction transversale Y ou selon une direction opposée à la direction transversale Y. De manière avantageuse et ainsi que représenté notamment sur la figure 5, le support 32 comprend également deux encoches 37, chaque encoche 37 étant destinée à recevoir un câble de communication, par exemple un câble Ethernet, non représenté.

Chaque support 32 comprend également un premier verrou 38 et un deuxième verrou 39. En configuration montée du système de distribution 1, les premier et deuxième verrous 38 et 39 sont respectivement un verrou supérieur et un verrou inférieur. Le premier verrou 38 coopère avec l'un des crans de fixation 19 du premier bord intérieur 14 au moyen d'un premier ergot 42, qui traverse le cran de fixation 19 du premier bord intérieur 14. Le deuxième verrou 39 coopère avec l'un des crans de fixation 19 du deuxième bord intérieur 15, qui est en particulier le cran de fixation 19 du deuxième bord intérieur 15 en regard selon la direction transversale Y du cran de fixation 19 du premier bord intérieur 14. Cette coopération est effectuée au moyen d'un deuxième ergot 43 qui traverse le cran de fixation 19 du bord inférieur 15. En configuration montée du système de distribution 1, les premier et deuxième ergots 42 et 43 sont respectivement un ergot supérieur et un ergot inférieur.

Le contre-support 34 s'étend selon la direction transversale Y et est en appui contre le support 32 selon la direction d'épaisseur Z, par exemple en étant vissé au support 32. Le contre-support 34 ferme les encoches 36, empêchant un mouvement des barres 25 selon la direction d'épaisseur Z. De plus, le contre-support 34 est en appui contre les premier et deuxième verrous 38 et 39 et les déforme élastiquement, afin de les plaquer respectivement contre le premier bord intérieur 14 et contre le deuxième bord intérieur 15 et de maintenir le premier ergot r 42 en coopération avec le cran de fixation 19 du premier bord intérieur 14 et le deuxième ergot 43 en coopération avec le cran de fixation 19 du deuxième bord intérieur 15. Ainsi, le dispositif de maintien 30 est fixé à la goulotte 12, sans besoin de visser le support 32 à la goulotte 12 ou au mur 8.

Les dispositifs de maintien 30 empêchent donc les barres 25 de bouger. En particulier, dans le cas d'un défaut électrique comme un court-circuit, une force de répulsion, dite force électrodynamique, proportionnelle au courant circulant dans les barres s'exerce entre les barres 25, tendant à les écarter les unes des autres. Le nombre de dispositifs de maintien 30 dans le système 10 est avantageusement déterminé en fonction du courant circulant dans les barres 25 et de la force de répulsion maximale que les dispositifs de maintien 30 doivent supporter en cas de court-circuit. Ajouter des dispositifs de maintien 30 permet notamment de diminuer une distance entre deux dispositifs 30 consécutifs, ce qui permet de moduler le nombre de dispositifs de maintien 30 en fonction des forces électrodynamiques à supporter. En outre, la forme de barres 25, qui sont aplaties selon la direction d'épaisseur Z, diminue des surfaces des barres 25 en vis-à-vis les unes des autres, ce qui limite des forces électrodynamiques qui s'exercent sur les barres 25.

La présence de crans de fixation 19 régulièrement espacés selon la direction longitudinale X le long des premier et deuxième bords 14 et 15 permet de fixer les supports de fixation 30 là où nécessaire pour supporter les efforts électromécaniques, et adapter le nombre et la position des supports 30 facilement.

Le capot 47 est en matériau électriquement isolant, tel que des matériaux synthétiques comme du plastique, ou métallique, et recouvre la goulotte 11 selon la direction longitudinale X. De manière particulièrement avantageuse, le capot 47 est composé de plusieurs tronçons de capot 47a, chaque tronçon 47a recouvrant l'une des tôles 12, ainsi que les barres 25 et les dispositifs de maintien 30 montés sur cette tôle 12. Chaque tronçon 47a comprend des crochets élastiques supérieurs 146 et inférieurs 147. Le crochet élastique supérieur 146 est en appui contre la première lèvre 16 et le crochet élastique inférieur 147 est en appui contre la deuxième lèvre 17. Le tronçon 47a est ainsi retenu par les crochets élastiques 146 et 147 dans la direction d'épaisseur Z. Ainsi le capot 47 est encastré sur la goulotte 11, sans nécessiter de fixation supplémentaire comme des vis pour fixer le capot 47 à la goulotte 11.

Chaque boîtier de dérivation 40 est configuré pour connecter les barres 25 à l'une des bornes d'alimentation 5. Chaque boîtier de dérivation 40 est installé au niveau d'une zone de jonction 28 des barres 25.

Chaque boîtier de dérivation 40 comprend une embase 42. L'embase 42 est avantageusement en matériau électriquement isolant, tel que des matériaux synthétiques comme du plastique.

L'embase 42 est fixée sur la goulotte 11, plus précisément sur l'une des tôles 12. L'embase 42 est en appui contre le fond 13 de la tôle 12, selon la direction d'épaisseur Z. L'embase 42 comprend une première platine 44 et une deuxième platine 45, s'étendant le long de l'embase 42 selon la direction longitudinale X, et situées de part et d'autre du reste de l'embase 42 selon la direction transversale Y. La première platine 44 est en appui contre le premier bord intérieur 14, et la deuxième platine 45 est en appui contre le deuxième bord intérieur 15. En configuration montée du système de distribution 1, les première et deuxième platines 44 et 45 sont respectivement une platine supérieure et une platine inférieure. Les platines 44 et 45 fixées sur les bords 14 et 15 permettent l'installation de l'embase 42 à n'importe quel endroit sur la goulotte 11.

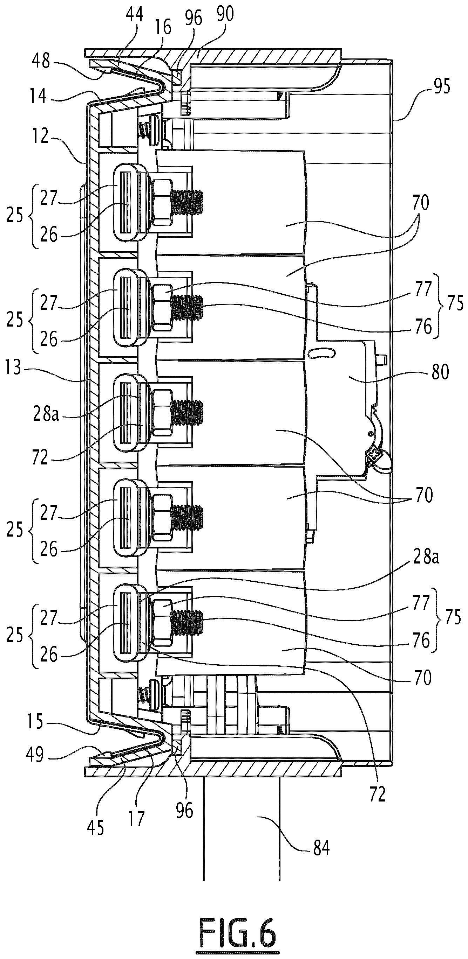

La première platine 44 comprend une pluralité de premières dents 48, et la deuxième platine 45 comprend une pluralité de deuxièmes dents 49, visibles à la figure 6. Les premières et deuxièmes dents 48 et 49 sont en appui respectivement contre la première lèvre 16 et contre la deuxième lèvre 17 dans la direction d'épaisseur Z. Les premières et deuxièmes dents 48 et 49 retiennent l'embase 42 par coopération de formes des premières et deuxièmes dents 48 49 avec respectivement la première lèvre 16 et la deuxième lèvre 17 et empêchent l'embase 42 de se détacher de la tôle 12. En configuration montée du système de distribution 1, les premières et deuxièmes dents 48 et 49 sont respectivement des dents supérieures et des dents inférieures.

L'embase 42 définit des couloirs 51, ici cinq couloirs 51, s'étendant selon la direction longitudinale X, chaque couloir 51 recevant l'une des barres 25. L'embase 42 définit également des couloirs supplémentaires 53, disposés ici de part et d'autre des couloirs 51 selon la direction transversale Y, chaque couloir 53 recevant l'un des câbles de communication.

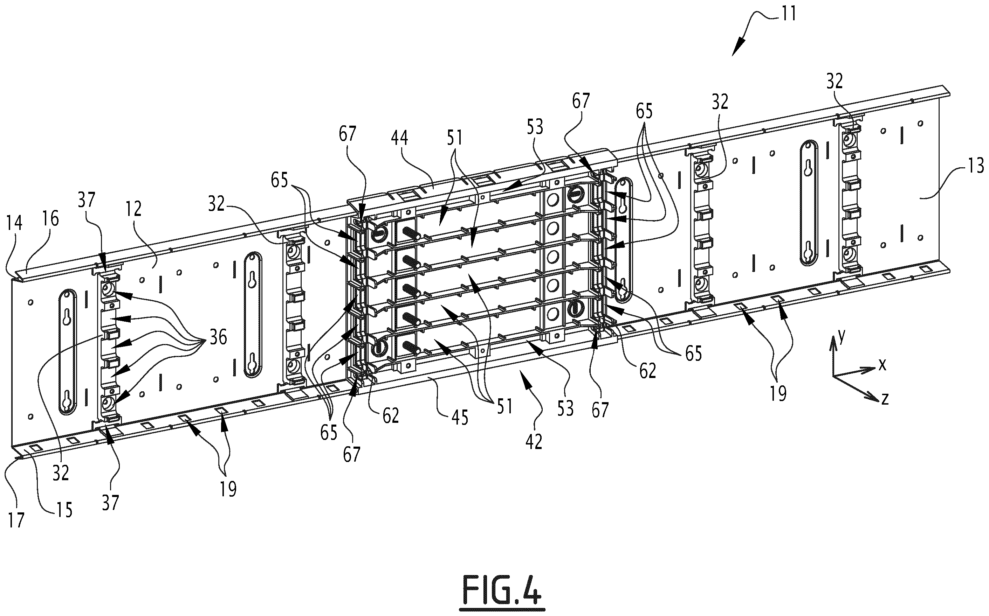

Chaque boîtier de dérivation 40 comprend en outre deux dispositifs d'étanchéité 60, reçus dans l'embase 42. Chaque dispositif d'étanchéité 60 s'étend depuis la platine inférieure 45 jusqu'à la première platine 44 selon la direction transversale Y et comprend un joint 62, visible à la figure 4 et un contre-joint 63, visible à la figure 3.

Le joint 62 est logé dans l'embase 42 et comprend des encoches 65, chaque encoche recevant l'une des barres 25. Ainsi que représenté sur les figures, le joint 62 comprend deux encoches 67 supplémentaires, de part et d'autre des encoches 65 selon la direction transversale Y, chacune recevant l'un des câbles de communication.

Le contre-joint 63 s'étend selon la direction transversale Y et est en appui contre le joint 62 dans la direction d'épaisseur Z. Le contre-joint 63 comprend avantageusement des encoches 69 et 71, qui de manière similaire aux encoches 65 et 67, reçoivent respectivement les barres 25 et les câbles de communication. Les barres 25 sont interposées entre le joint 62 et le contre-joint 63 dans la direction d'épaisseur Z. Ainsi le joint 62 et le contre-joint 63 épousent la forme des barres 25. De plus, le contre-joint 63 est affleurant aux première et deuxième platines 44 et 45 dans la direction d'épaisseur Z. Les dispositifs d'étanchéités 60 assurent ainsi une bonne étanchéité de l'embase 40, au niveau de ses deux extrémités selon la direction de la direction X.

Le boîtier de dérivation 40 comprend, en outre, des prises de dérivation 70, visibles aux figures 3 et 6. Chaque prise de dérivation 70 comprend une languette 72, en matériau électriquement conducteur, par exemple en cuivre, en contact avec les première et deuxième extrémités 28a et 28b de l'une des barres 25.

Les première et deuxième extrémités 28a et 28b sont en appui l'une sur l'autre selon la direction d'épaisseur Z et la languette 72 est en appui contre la première extrémité 28a dans la direction d'épaisseur Z.

Le boîtier de dérivation 40 comprend des connecteurs 75, chaque connecteur maintenant les extrémités 28a, 28b d'une barre 25 et la languette 72 de la prise de dérivation 70 associée en appui les unes contre les autres, et connectées électriquement entre elles. Chaque connecteur 75 est ici un boulon, comprenant une tige filetée 76, fixée à l'embase 42 et un écrou 77. La tige filetée 76 est fixée à l'embase 42 afin de maintenir la tige filetée 76 fixe et faciliter un serrage de l'écrou 77.

Le boîtier de dérivation 40 comprend au moins un dispositif de protection électrique 80, visible aux figures 3 et 6, connecté à au moins une des prises de dérivation 70. Ici, le dispositif de protection électrique 80 est connecté à deux prises de dérivation 70. De manière particulièrement avantageuse, le dispositif de protection électrique 80 est connecté en entrée à l'une des barres 25 correspondant à l'une des trois phases, et à la barre 25 correspondant au neutre, et en sortie à l'une des bornes d'alimentation 5, au moyen de câbles 83. Le dispositif de protection électrique 80 comprend un disjoncteur miniature et de manière optionnelle, un disjoncteur intégrant une protection différentielle.

De manière optionnelle mais particulièrement avantageuse, le boîtier de dérivation 40 comprend également un dispositif de mesure 85 de consommation électrique, connecté entre le dispositif de protection électrique 80 et les câbles 83.

Le dispositif de mesure 85 est par exemple configuré pour mesurer la puissance ou l'intensité du courant consommé par la charge lorsqu'elle est branchée à la borne d'alimentation 5. Chaque dispositif de mesure 85 est avantageusement connecté en série aux deux câbles de communication, et est configuré pour transmettre des données relatives à la consommation électrique instantanée ou moyenne à une unité de contrôle électronique, non représentée. L'unité de contrôle électronique est avantageusement adaptée à traiter les données et à les afficher à destination d'un utilisateur, et, de manière particulièrement avantageuse, est adaptée à ajuster une puissance du courant électrique circulant dans le système de distribution de courant 10 en fonction des données reçues.

Dans le cas où le boîtier de dérivation 40 ne comprend pas de dispositif de mesure 85, les câbles de communication sont avantageusement reliés à chaque borne d'alimentation 5 et à l'unité de contrôle électronique.

Ainsi que représenté figure 3, le dispositif de protection électrique 80 et le dispositif de mesure sont montés sur des rails de fixation 88 qui sont fixés à l'embase 42 par des vis 89.

Les câbles 83 relient le dispositif de mesure 85 à la borne d'alimentation alimentée à travers le dispositif de protection 80 circulent avantageusement dans une gaine 84 jusqu'à la borne d'alimentation 5. Ainsi, une partie du courant électrique circulant dans les barres 25 est dévié depuis les barres de puissance 25 jusqu'à la borne d'alimentation 5. Le dispositif de protection électrique 80 permet de protéger les câbles 83 reliés à la borne d'alimentation 5

Le boîtier de dérivation 40 comprend également une enveloppe intermédiaire 90. L'enveloppe intermédiaire 90 entoure l'embase 42, les prises de dérivation 70, les dispositifs de protection électrique 80 et de mesure 85 et les rails de fixation 88.

L'enveloppe intermédiaire 90 est en appui sur les première et deuxième platines 44 et 45 dans la direction transversale Y. Ainsi, l'enveloppe intermédiaire 90 maintient les premières et deuxièmes dents 48 et 49 en prise respectivement avec la première lèvre 16 et la deuxième lèvre 17. Par conséquent, elle maintient l'embase 42 fixée à la tôle 12. En outre, l'enveloppe intermédiaire 90 est fixée à l'embase 42 par des vis 91, non représentées.

Le boîtier de dérivation 40 comprend une face externe 95, en matériau électriquement isolant, par exemple des matériaux synthétiques comme du plastique, fixée à l'enveloppe intermédiaire 90 par des vis 97 et recouvrant l'enveloppe intermédiaire 90, l'embase 42 et les éléments fixés à l'embase 42. De manière avantageuse, la face externe 95 comprend une vitre, ou une porte 99, pour qu'un utilisateur puisse accéder au dispositif de protection électrique 80, ou puisse lire une consommation d'électricité sur le dispositif de mesure de consommation électrique 85 lorsque celui-ci est pourvu d'un afficheur.

De manière avantageuse, des joints 96, situés entre l'enveloppe intermédiaire 90 et l'embase 42 selon la direction d'épaisseur Z, et des joints additionnels non représentés, sont interposés entre la face externe 95 et l'enveloppe intermédiaire 90 selon la direction d'épaisseur Z. Les joints 96 et les joints additionnels viennent en complément des deux dispositifs d'étanchéité 60, afin que le boîtier de dérivation 40 satisfasse à une norme d'indice de protection eau et poussière telle que les normes IP55 ou IP66.

De manière optionnelle mais avantageuse, ainsi que représenté sur la figure 1, l'ensemble d'alimentation électrique 1 comprend en outre un boîtier de jonction 100. Le boîtier de jonction 100 sert à d'assurer la circulation du courant le long des barres 25 au niveau des zones de jonction 28, sans nécessiter l'installation d'un boîtier de dérivation 40. Cela est le cas par exemple s'il faut connecter deux sections d'une même barre 25, sans ajouter de borne d'alimentation supplémentaire 5 qui nécessiterait l'installation d'un boîtier de dérivation 40.

A cet effet, le boîtier de jonction 100 comprend des connecteurs, non représentés, semblables aux connecteurs 75 du boîtier de dérivation 40. Le boîtier de jonction 100 comprend également une embase 101, qui entoure les connecteurs et les première et deuxième extrémités 28a et 28b. De manière avantageuse, l'embase 101 est similaire à l'embase 42, et comprend notamment une première platine ou platine supérieure et une deuxième platine ou platine inférieure qui comprennent respectivement une pluralité de premières dents ou dents supérieures et une pluralité de deuxièmes dents ou dents inférieures, l'embase 101 étant fixée à la goulotte 11 par coopération de formes des premières dents avec le premier bord intérieur 14 et des deuxièmes dents avec le deuxième bord intérieur 15 de la goulotte 12. Dans la mesure où elle n'a pas à contenir des prises de dérivation ou un dispositif de protection électrique comparables aux éléments 70 et 80, l'embase 101 peut avoir une dimension parallèle à la direction longitudinale X qui est inférieure à celle de l'embase 42.

De manière avantageuse, l'embase 101 définit des couloirs, chaque couloir recevant l'une des parties aval 25b et la partie amont 25a suivant immédiatement cette partie aval 25b selon la direction longitudinale X, de l'une des barres 25. Avantageusement, deux couloirs additionnels reçoivent chacun l'un des câbles de communication.

Le boîtier de jonction 100 comprend également une face externe 102, fixée sur l'embase 101, par exemple au moyen de vis, non représentées, et recouvrant les connecteurs, ainsi que, pour chaque barre 25, les parties amont 25a et aval 25b connectées au connecteur.

De manière optionnelle mais particulièrement avantageuse, le boîtier de jonction 100 est conforme à la norme d'indice de protection eau et poussière tel que IP55 ou IP66, et comprend par exemple un joint interposé entre l'embase 101 et la face externe 102, et deux dispositifs d'étanchéité similaires aux dispositifs d'étanchéité 60 du boîtier de dérivation 40, disposés de part et d'autre des connecteurs selon la direction longitudinale X.

Sur la figure 1, l'ensemble d'alimentation électrique 1 comprend en outre un boîtier d'alimentation 110. Le boîtier d'alimentation 110 relie un câble d'alimentation 120 aux barres 25. Le câble d'alimentation est apte à être connecté à la source de courant, afin que du courant électrique circule depuis la source de courant jusqu'au boîtier d'alimentation 110, dans le câble d'alimentation 120.

Le boîtier d'alimentation 110 comprend une embase, non visible, une enveloppe intermédiaire 111 et une face externe 112. L'embase, l'enveloppe intermédiaire 111 et la face externe 112 sont avantageusement similaires à l'embase 42 ou 101, à l'enveloppe intermédiaire 90 et la face externe 102.

En particulier, l'embase comprend une première platine ou platine supérieure et une deuxième platine ou platine inférieure, comprenant respectivement une pluralité de premières dents ou dents supérieures et une pluralité de deuxièmes dents ou dents inférieures, l'embase étant fixée à la goulotte 11 par coopération de formes des premières dents avec le premier bord intérieur 14 et des deuxièmes dents avec le deuxième bord intérieur 15, l'embase définissant des couloirs recevant chacun l'une des barres 25 et avantageusement, les câbles de communication.

L'enveloppe intermédiaire 111 est fixée à l'embase et est en appui sur les première et deuxième platines, et maintient ainsi les premières et deuxièmes dents en prise respectivement avec le premier bord intérieur 14 et le deuxième bord intérieur 15. L'enveloppe intermédiaire 111 comprend une ouverture pour laisser passer le câble d'alimentation 120 dans le boîtier d'alimentation 110.

La face externe 112 est fixée sur l'enveloppe intermédiaire 111, par exemple au moyen de vis non représentées et recouvre l'enveloppe intermédiaire 111.

Selon une variante avantageuse, le boîtier d'alimentation 110 comprend un sectionneur, non représenté, fixé au boîtier 110, logé à l'intérieur de l'enveloppe intermédiaire 111 et recouvert par la face externe 112. Le sectionneur est connecté entre le câble d'alimentation 120 et les barres 25. Le sectionneur est configuré pour interrompre la circulation du courant électrique dans l'ensemble d'alimentation électrique 1, par exemple en cas de défaut électrique de l'ensemble d'alimentation électrique 1.

Selon une autre variante avantageuse, le boîtier d'alimentation 110 comprend un dispositif d'étanchéité, similaire au dispositif d'étanchéité 60, et des joints entre la face externe 112 et l'enveloppe intermédiaire 111, et entre l'enveloppe intermédiaire 111 et l'embase, notamment pour répondre aux norme IP-55 ou IP-66.

Selon une variante non représentée, les barres ne comprennent qu'une seule section. Dans ce cas, le boîtier de dérivation 40 n'est pas situé au niveau d'une zone de jonction entre deux sections, mais à la partie aval de cette seule section, et les prises de dérivation comprennent chacune une tige conductrice qui traverse la gaine de l'une des barres et est en contact avec son âme. Le système de distribution de courant ne comprend alors pas de boîtier de jonction.

En variante non représentée, l'ensemble d'alimentation électrique ne comprend pas de boîtier d'alimentation, les barres étant directement reliées à la source électrique.

En variante non représentée, l'ensemble d'alimentation électrique ne comprend qu'un boîtier de dérivation et qu'une borne d'alimentation, connectée au boîtier de dérivation.

En variante non représentée, l'ensemble d'alimentation électrique ne comprend que deux barres, l'une des deux barres étant configurée pour qu'un courant de phase circule au travers, et l'autre des deux barres étant configurée pour servir de neutre.

On conçoit que le système 10 comprend de nombreux avantages. Notamment, un utilisateur peut choisir de former une zone de jonction 28 où il le souhaite, par exemple en coupant une barre 25 et en dénudant l'âme 26 pour former les extrémités 28a et 28b.

L'embase 42 du boîtier de dérivation 40 peut également être fixé en tout point de la goulotte 11, ainsi, le boîtier de dérivation 40 peut être fixé sur la goulotte peu importe la position de la zone de jonction 28 le long de la goulotte 11.

Le système 10 permet également d'équiper la surface de support sans qu'il soit nécessaire d'installer tous les éléments du système 10. Par exemple, lors d'une première étape d'équipement, aussi dite étape de pré-équipement, l'utilisateur installe seulement la goulotte 11 et le capot 47. En option, il installe également une embase 42, une enveloppe intermédiaire 90 et une face externe 95 d'un boîtier de dérivation 40. Par la suite, le reste du système 10 est installé, en fonction des besoins, et/ou l'étape de pré-équipement est répétée en vue d'une extension du système 10. L'étape de pré-équipement nécessite l'utilisation de peu de matériel, laissant une large possibilité d'adaptation aux souhaits de l'utilisateur à coût réduit.

Ainsi, le système 10 s'adapte facilement à différents besoins, et également à une évolution des besoins de l'utilisateur dans le temps, en rendant possible de retirer ou ajouter des bornes d'alimentation 5, des boîtiers de dérivation 40 et en créant des zones de jonction 28 supplémentaires. Par exemple, en référence à la figure 1, si l'utilisateur équipe une première place de parking avec une borne d'alimentation puis souhaite une densité plus grande de bornes d'alimentation 5 que ce qu'il avait prévu initialement, par exemple, équiper deux places de parking supplémentaires, il est possible de modifier le système 10, sans avoir à le changer en intégralité.

Toute caractéristique décrite pour un mode de réalisation ou une variante dans ce qui précède peut être mise en oeuvre pour les autres modes de réalisation et variantes décrits précédemment, pour autant que techniquement faisable.

## Revendications

1. Système (10) de distribution de courant comprenant :
- une goulotte (11) adaptée à être fixée à une surface de support (8), s'étendant selon une direction longitudinale (X), la goulotte (11) comprenant un fond (13), un premier bord (14) et un deuxième bord (15), les premier et deuxième bords (14, 15) s'étendant de part et d'autre du fond (13) selon une direction transversale (Y) et comprenant chacun des crans de fixation (19) ;
- plusieurs barres (25), s'étendant au moins partiellement dans la goulotte (11) selon la direction longitudinale (X), chaque barre (25) comprenant une âme (26) en matériau électriquement conducteur configurée pour conduire un courant électrique, et une gaine (27) entourant l'âme (26), la gaine (27) étant électriquement isolante ; et
- un boîtier de dérivation (40),
**caractérisé en ce que** le système de distribution (10) comprend en outre :
- un dispositif de maintien (30) comprenant :
∘ un support (32), s'étendant selon la direction transversale (Y), le support (32) comprenant des encoches (36) recevant chacune une barre (25), un premier verrou (38) et un deuxième verrou (39), qui coopèrent respectivement avec un cran de fixation (19) du premier bord (14) et un cran de fixation (19) du deuxième bord (15) et,
∘ un contre-support (34), en appui contre le support (32) selon une direction d'épaisseur (Z), le contre-support (34) déformant élastiquement le premier verrou (38) et le deuxième verrou (39) afin de maintenir le premier verrou (38) et le deuxième verrou (39) en coopération respectivement avec le cran de fixation (19) du premier bord (14) et le cran de fixation (19) du deuxième bord (15),
- un capot (47), encastré sur la goulotte (11) et recouvrant la goulotte (11), les barres (25) et le dispositif de maintien (30) ;
et **en ce que** le boîtier de dérivation (40) comprend :
∘ une embase (42), comprenant une première platine (44) et une deuxième platine (45) qui comprennent respectivement une pluralité de premières dents (48) et une pluralité de deuxièmes dents (49), l'embase (42) étant fixée à la goulotte (11) par coopération de formes des premières dents (48) avec le premier bord (14) et des deuxièmes dents (49) avec le deuxième bord (15) de la goulotte, l'embase (42) définissant des couloirs (51) recevant chacun une barre (25) ;
∘ des prises de dérivation (70), chaque prise de dérivation (70) étant connectée à l'une des barres (25),
∘ un dispositif de protection électrique (80), connecté à au moins l'une des prises de dérivation (70),
∘ une enveloppe intermédiaire (90), fixée à l'embase (42) et entourant l'embase (42), les prises de dérivation (70) et le dispositif de protection électrique (80), l'enveloppe intermédiaire (90) étant en appui sur la première platine (44) et sur la deuxième platine (45), l'enveloppe intermédiaire (90) maintenant les premières et deuxièmes dents (48, 49) en prise respectivement avec le premier bord (14) et avec le deuxième bord (15), et
∘ une face externe (95), fixée sur l'enveloppe intermédiaire (90) et recouvrant les prises de dérivation (70) et le dispositif de protection électrique (80).

2. Système (10) selon la revendication 1, dans lequel le boîtier de dérivation (40) comprend en outre deux dispositifs d'étanchéité (60) disposés de part et d'autre des prises de dérivation (70) et du dispositif de protection électrique (80) selon la direction longitudinale (X), chaque dispositif d'étanchéité (60) comprenant :
- un joint (62), s'étendant selon la direction transversale (Y), logé dans l'embase (42), le joint (62) comprenant des encoches (65) recevant chacune une des barres (25) ; et
- un contre-joint (63), s'étendant selon la direction transversale (Y), les barres (25) étant interposées entre le joint (62) et le contre-joint (63), le contre-joint (63) étant affleurant aux première et deuxième platines (44, 45).

3. Système (10) selon l'une quelconque des revendications précédentes, comprenant en outre un boîtier d'alimentation (110), comprenant :
- une embase comprenant une première platine et une deuxième platine, comprenant respectivement une pluralité de premières dents et une pluralité de deuxièmes dents, l'embase étant fixée à la goulotte (11) par coopération de formes des premières dents avec le premier bord et des deuxièmes dents avec le deuxième bord, l'embase définissant des couloirs recevant chacun l'une des barres (25),
- un sectionneur, connecté entre un câble d'alimentation (120) et les barres (25), le câble d'alimentation (120) étant apte à être connecté à une source électrique;
- une enveloppe intermédiaire (111), fixée à l'embase et entourant l'embase et le sectionneur, l'enveloppe intermédiaire (111) comprenant une ouverture pour laisser passer le câble d'alimentation (120), l'enveloppe intermédiaire (111) étant en appui sur le première et deuxième platines et maintenant ainsi les premières et deuxièmes dents en prise respectivement avec le premier bord (14) et avec le deuxième bord (15) ; et
- une face externe (112), fixée sur l'enveloppe intermédiaire (111) et recouvrant le sectionneur.

4. Système (10) selon l'une quelconque des revendications précédentes, dans lequel les barres (25) comprennent chacune une partie amont (25a) et une partie aval (25b), chaque partie amont (25a) comprenant une première extrémité (28a) au niveau de laquelle l'âme (26) est apparente, chaque partie aval (25b) comprenant une deuxième extrémité (28b) au niveau de laquelle l'âme (26) est apparente, la deuxième extrémité (28b) étant en appui sur la première extrémité (28a) dans la direction d'épaisseur (Z), le système (10) comprenant en outre :
- un boîtier de jonction (100), comprenant :
∘ des connecteurs (75), chaque connecteur connectant, pour l'une des barres (25) donnée, la première extrémité (28a) et la deuxième extrémité (28b) entre elles,
∘ une embase (101), entourant les premières (28a) et deuxièmes (28b) extrémités et les connecteurs, l'embase (101) comprenant une première platine et une deuxième platine qui comprennent respectivement une pluralité de premières dents et une pluralité de deuxièmes dents, l'embase étant fixée à la goulotte (11) par coopération de formes des premières dents avec le premier bord et des deuxièmes dents avec le deuxième bord de la goulotte (11), l'embase (101) définissant des couloirs recevant chacun la partie amont (25a) et la partie aval (25b) de l'une des barres (25) ; et
- une face externe (112), fixée sur l'embase (101) et recouvrant les connecteurs et la première (28a) et la deuxième (28b) extrémité des parties amont (25a) et aval (25b) de chaque barre (25).

5. Système (10) selon l'une quelconque des revendications précédentes, dans lequel le boîtier de dérivation (40) comprend en outre un dispositif de mesure (85), configuré pour mesurer une consommation électrique.

6. Système (10) selon l'une quelconque des revendications précédentes, comprenant cinq barres (25), les barres (25) étant configurées pour conduire respectivement une première phase, une deuxième phase, une troisième phase, un neutre et une référence de potentiel.

7. Système (10) selon l'une quelconque des revendications précédentes, comprenant une pluralité de dispositifs de maintien (30), répartis selon la direction longitudinale (X).

8. Ensemble d'alimentation électrique (1) comprenant :
- le système (10) selon l'une quelconque des revendications précédentes ;
- au moins une borne d'alimentation (5), connectée au dispositif de protection électrique (80), configurée pour alimenter une charge électrique lorsqu'elle est connectée à la borne d'alimentation (5) par un utilisateur.

9. Ensemble d'alimentation électrique (1) selon la revendication 8, comprenant en outre un câble de communication, reliant la borne d'alimentation (5) à une unité de contrôle électronique, le support (32) comprenant une encoche (37) recevant le câble de communication.

10. Ensemble (1) selon la revendication 9 dans laquelle la charge électrique est une batterie d'un véhicule électrique (7).
